# EUROPEAN PATENT APPLICATION

(11) **EP 4 769 204 A1**
(43) Date of publication of application: **01.07.2026**
(21) Application number: 25227009.5
(22) Date of filing: 23.12.2025
(51) Int. Cl.: G06F 40/18

(54) **METHODS AND SYSTEMS FOR SPREADSHEET CONVERSIONS**

(30) Priority: 30.12.2024 US 202463740089 P
(71) Applicant: Highradius Corporation, Houston, TX 77042 (US)
(72) Inventor: SUMAN, Sanjeev, 500081 Telangana (IN); GUPTA, Sidharth, 500081 Telangana (IN); DODDA, Murali Mohan Reddy, 500081 Telangana (IN); BONI, Prasanna, 500081 Telangana (IN)
(74) Representative: Mewburn Ellis LLP

(57) **Abstract**

According to an embodiment, the present invention provides a method for converting spreadsheet files into structured workbooks. The method includes receiving a spreadsheet file and identifying tables within it. Metadata associated with the tables is extracted and matched using fuzzy matching to identify standard objects and reports. The method further includes extracting formulas, selecting templates based on identified objects and reports, and creating a dependency graph. A topological sort is performed on the dependency graph to resolve dependencies. A workbook is generated, including sheets based on the processed tables and dependency graphs, and stored in non-volatile memory. A detailed report is also generated, documenting the conversion process. There are other embodiments as well.

## Description

### CROSS REFERENCE TO RELATED APPLICATIONS

This application is a non-provisional of U.S. Patent Application No. 63/740,089 filed December 30, 2024, the disclosure of which is incorporated herein by reference in its entirety and for all purposes.

### BACKGROUND OF THE INVENTION

Spreadsheet software such as Microsoft Excel is widely used for managing financial data, operational data, and analytical workflows. However, the limitations of existing solutions for converting these spreadsheets into more structured, scalable, and automated systems - such as autonomous finance platforms, online tools, cloud or web-based applications that allow users to create and manage financial models using easy to use Excel like interface without any coding, for example structured workbooks, such as LiveCube^{™} workbooks, are inadequate. New and improved methods and systems are desired.

### BRIEF SUMMARY OF THE INVENTION

According to an embodiment, the present invention provides a method for converting spreadsheet files into structured workbooks. The method includes receiving a spreadsheet file and identifying tables within it. Metadata associated with the tables is extracted and matched using fuzzy matching to identify standard objects and reports. The method further includes extracting formulas, selecting templates based on identified objects and reports, and creating a dependency graph. A topological sort is performed on the dependency graph to resolve dependencies. A workbook is generated, including sheets based on the processed tables and dependency graphs, and stored in non-volatile memory. A detailed report is also generated, documenting the conversion process. There are other embodiments as well.

In an embodiment, the present invention provides a method that involves receiving a spreadsheet file, either locally or via a communication network, and identifying a first table within the file. Metadata associated with the table is extracted, and fuzzy matching techniques, potentially leveraging large language models (LLMs), are used to identify a standard object for an input sheet by comparing the metadata to standard object patterns and to identify a standard report for an output sheet by matching the metadata to standard report signatures. The method includes selecting a template based on the identified object and report, creating a dependency graph for the table using a tokenizer, and resolving dependencies through a topological sort to determine the calculation order. A workbook or digital document is generated, comprising a first sheet that incorporates the table and its dependency graph, with the workbook stored in non-volatile memory. Additional functionality includes the creation of a second sheet containing adjusted formulas based on the new workbook structure. The method further generates a report summarizing the conversion process, which can be transmitted via a communication network and displayed on a user interface device.

In various implementations, additional steps include extracting key-value pairs from the first table, documenting the rationale for template selection, identifying bounding boxes for tables, and splitting tables into a second table of non-calculated columns and a third table of calculated columns. Formulas from the first table can be converted into an English text representation for validation and subsequently into an alternative format. The method ensures dependencies based on the topological order are maintained within the generated sheets.

In another embodiment, the present invention provides a system implementing the method, and the system comprises a communication interface configured to receive the spreadsheet file and transmit metadata for cloud-based processing using LLMs, a memory for storing metadata and dependency graphs, non-volatile storage for saving the generated workbook, and a processor. The processor is configured to execute instructions to identify multiple tables and their borders, extract metadata, perform fuzzy matching for object and report identification, create dependency graphs, resolve dependencies, generate workbooks, and produce detailed reports.

The invention, in various embodiments, offers many benefits. For example, the system's automated identification and classification of tables and formulas significantly reduces the manual effort required to interpret and process complex spreadsheets. By leveraging heuristic algorithms, the system treats bounding boxes with fewer than a configurable number of continuous empty rows or columns as tables. Various approaches allow for non-standard layouts, such as spreadsheets with merged cells or irregular structures, and spreadsheets are accurately recognized and classified. This automation eliminates the error-prone and time-consuming manual identification process, enabling seamless and efficient data processing.

In various implementations, Excel and other types of formulae are analyzed, converted, and aligned with LiveCube^{™}'s columnar formula framework, which may include managing differences in syntax and functionality between the two platforms.

It is to be appreciated that embodiments of the present invention offer detailed conversion reports, providing users with transparency and validation throughout the conversion process. These reports document key aspects such as the structure and metadata of the input spreadsheets, the dependencies and formulas identified, and the rationale for template selection. Any unresolved issues or manual adjustments required are outlined, empowering users to address them with full context.

Moreover, the present invention addresses various technical challenges that have hindered existing spreadsheet conversion techniques. For example, it handles differences in formula syntax between Excel and LiveCube^{™}, including the limited support for cell-level formulas in LiveCube^{™}. The system intelligently manages dependencies between tables and formulas by creating a dependency graph and performing a topological sort, ensuring data consistency and preventing calculation errors. Additionally, it preserves data integrity throughout the process by accurately maintaining relationships between formulas, tables, and metadata.

The present invention achieves these benefits and others in the context of known technology. However, a further understanding of the nature and advantages of the present invention may be realized by reference to the latter portions of the specification and attached drawings.

### BRIEF DESCRIPTION OF THE DRAWINGS

Figure 1 is a simplified block diagram illustrating a system for converting spreadsheets for processing by an online system according to embodiments of the present invention.
Figure 2 is a simplified dataflow diagram illustrating a method for converting spreadsheets for processing by an online system according to embodiments of the present invention.
Figure 3 is a simplified flow diagram illustrating a method for converting spreadsheets for processing by an online system according to embodiments of the present invention.
Figure 4 is a simplified diagram illustrating an input spreadsheet being used for conversion according to embodiments of the present invention.
Figure 5 is a simplified diagram illustrating a spreadsheet extracted by a table classification and template matching module according to embodiments of the present invention.
Figure 6 is a simplified diagram illustrating a spreadsheet obtained as the output of a table classification and template matching module according to embodiments of the present invention.
Figure 7 is a simplified diagram illustrating a spreadsheet obtained as the output of a dependency resolution according to embodiments of the present invention.
Figure 8 is a simplified diagram illustrating a spreadsheet generated by a workbook generation module according to embodiments of the present invention.
Figure 9 is a simplified diagram illustrating a system configured to convert spreadsheets and workbooks according to embodiments of the present invention.

### DETAILED DESCRIPTION OF THE INVENTION

According to an embodiment, the present invention provides a method for converting spreadsheet files into structured workbooks. The method includes receiving a spreadsheet file and identifying tables within it. Metadata associated with the tables is extracted and matched using fuzzy matching to identify standard objects and reports. The method further includes extracting formulas, selecting templates based on identified objects and reports, and creating a dependency graph. A topological sort is performed on the dependency graph to resolve dependencies. A workbook is generated, including sheets based on the processed tables and dependency graphs, and stored in non-volatile memory. A detailed report is also generated, documenting the conversion process. There are other embodiments as well.

As explained above, existing methods and systems for converting spreadsheets are inadequate. More specifically, existing tools in the market, ranging from manual conversion methods to commercial and open-source solutions, fail to address the complexities involved in formula preservation, dependency tracking, and business context detection.

Manual conversion tools, such as Microsoft Power Query for Excel and Framtidsforum's Spreadsheet Converter, are limited to basic data transformations and lack support for complex formulas, business logic preservation, or intelligent table detection. Commercial solutions, such as Aspose.Cells and SpreadsheetGear, provide basic formula parsing but are constrained by their inability to handle nested formulas or align with specific business use cases. Similarly, open-source libraries like Apache POI and PHPSpreadsheet offer rudimentary support for spreadsheet manipulation but fail to handle large workbooks, track dependencies, or preserve complex calculations.

Enterprise-level tools, such as Oracle's Smart View and SAP Analysis for Office, integrate spreadsheets with specific ecosystems but lack flexibility and support for translating custom formulas. Cloud-based solutions, including Google Sheets and Microsoft Power Automate, often suffer from loss of advanced functionality during conversion. Financial tools, such as Bloomberg Excel Add-in and FactSet Excel Connect, are tailored to predefined templates and provide little support for custom business logic. Proprietary in-house tools and hybrid approaches are often use-case-specific, error-prone, and non-scalable, requiring significant manual intervention and maintenance overhead.

Generic converters struggle with handling complex financial formulas, frequently encountering a failure rate exceeding 90% on nested calculations. Additionally, these tools lack the ability to detect business context, leading to misclassification of objects and failure to preserve dependencies between sheets. Memory inefficiencies and incorrect table boundary detection in sparse sheets further exacerbate the limitations, particularly when processing large files.

It is to be appreciated that embodiments of the present invention address these limitations by offering a robust system for automatically converting Excel files into LiveCube^{™}-compatible workbooks. It employs advanced techniques such as AI-powered formula translation, intelligent table detection using NLP and heuristics, and graph-based dependency resolution. In various implementations, the system can handle large workbooks exceeding 100MB, optimize performance through intelligent caching and memory management, and maintain cross-sheet dependencies with high accuracy.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

Please note, if used, the labels left, right, front, back, top, bottom, forward, reverse, clockwise and counter clockwise have been used for convenience purposes only and are not intended to imply any particular fixed direction. Instead, they are used to reflect relative locations and/or directions between various portions of an object.

As an example, a spreadsheet refers to a digital file that organizes data in a tabular format, typically represented by rows and columns. Spreadsheets may include numerical data, textual labels, and computational formulas to perform calculations or analyze data. They may also feature complex structures, such as merged cells, multiple tables, and hierarchical data relationships. Beyond data storage, spreadsheets serve as tools for managing and analyzing information, often containing advanced functionalities like conditional formatting, pivot tables, and embedded charts. Examples include files created using software like Microsoft Excel, Google Sheets, or similar tools.

A workbook, for example, refers to a construct that encapsulates one or more spreadsheets or "worksheets" within a single file or organizational unit. In this application, a workbook refers to the digital equivalent of a document that contains multiple sheets, where each sheet can hold distinct datasets, formulas, and metadata. Workbooks often support advanced features such as cross-sheet formula references, dependency tracking, and configurable templates. In the context of LiveCube^{™}, a structured workbook is an integrated output format designed for online systems, structured to preserve relationships and dependencies between data, while enabling seamless compatibility with LiveCube^{™}'s analytical and modeling features. For example, a structured workbook may refer to a digital construct that encapsulates one or more sheets, where each sheet contains organized datasets, formulas, and metadata arranged in a systematic manner. Unlike conventional workbooks, structured workbooks preserve relationships and dependencies among data elements, facilitating advanced features such as cross-sheet formula referencing, dependency tracking, and integration with configurable templates. "LiveCube" is a product of HighRadius Corporation (HighRadius), and it has been filed for trademark registration.

HighRadius Corporation is a leading provider of cloud-based autonomous software for the office of the CFO. HighRadius offers AI-powered solutions that automate key finance functions, including accounts receivable, treasury, and record-to-report processes. HighRadius has transformed financial operations by reducing cycle times and improving productivity through its Autonomous Finance Platform. The company's platform leverages artificial intelligence to continuously adapt to changing transactional data, delivering measurable business outcomes such as DSO reduction, working capital optimization, and improved productivity. HighRadius has been recognized as a leader in accounts receivable automation applications and continues to innovate in the fintech space.

For example, LiveCube^{™} refers to a cloud-based, Excel-like platform designed for managing, analyzing, and transforming financial and business data. In various implementations, LiveCube^{™} supports functionalities similar to traditional spreadsheets, such as creating and managing workbooks, performing calculations, and organizing data into structured formats. However, it also extends these capabilities with advanced features like formula translation, dependency resolution, and template-driven workflows tailored for financial and operational modeling. As an example, LiveCube^{™} workbooks may integrate with datasets, allowing calculated columns and cell-level functions that support real-time updates and seamless collaboration. While LiveCube^{™} is suited for financial modeling and reporting, its scope is not limited to these domains. It can be adapted to other data-centric workflows requiring structured organization, advanced computation, and multi-user interaction. This definition is non-limiting, as LiveCube^{™} or similar systems may vary in implementation, offering differing degrees of customization, extensibility, and scalability depending on the specific use case or integration requirements. It is to be understood that conversion methods and systems can be applied to various types of structured workbooks, such as LiveCube^{™} workbooks.

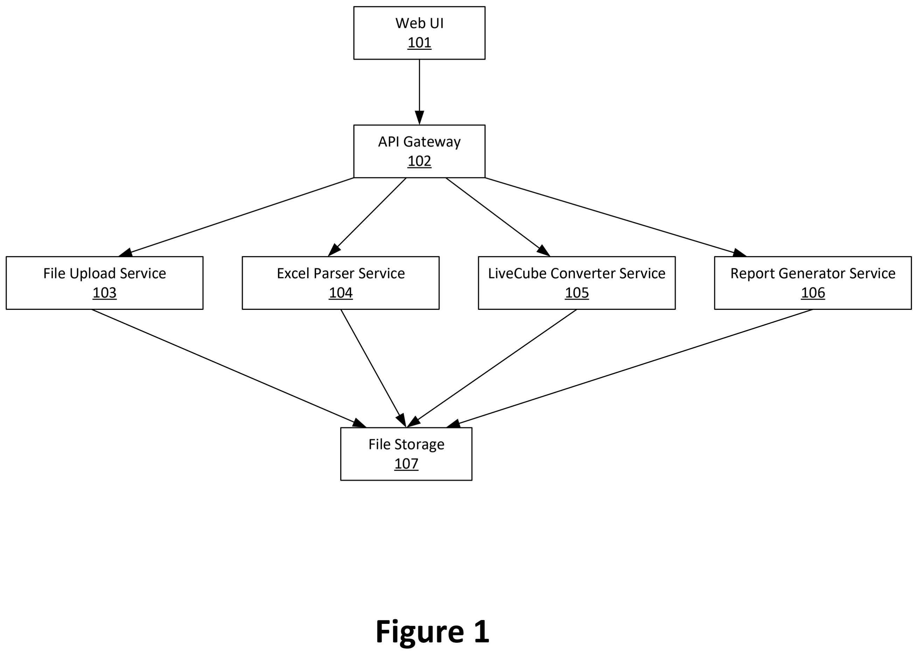

Figure 1 is a simplified block diagram illustrating a system for converting spreadsheets for processing by an online system according to embodiments of the present invention. This diagram is merely an example, which should not unduly limit the scope of the claims. One of ordinary skill in the art would recognize many variations, alternatives, and modification. For example, the system is configured to efficiently handle tasks such as data extraction, formula translation, dependency resolution, and report generation.

At the core of user interaction is the web user interface (or Web UI) 101, which serves as the entry point for users to upload spreadsheet files, monitor the conversion process, and access the resulting workbooks and reports. In various embodiments, this interface simplifies user engagement by providing a straightforward mechanism for initiating and managing conversions.

API Gateway 102 acts as an intermediary between the web UI and the backend services, which perform workbook and spreadsheet conversions. For example, it routes user requests to appropriate modules while managing authentication, authorization, and secure communication. Additionally, the API Gateway handles load balancing, ensuring that requests are distributed evenly across system components for optimal performance. File upload service 103 is responsible for receiving spreadsheet files uploaded via the Web UI. For example, at block 103, the service validates the uploaded files for format and size compatibility before storing them in the file storage 107 module.

Spreadsheets are processed by excel parser service 104. This module extracts critical information from the spreadsheets, including tables, metadata, and formulas. Advanced techniques, such as heuristic algorithms and natural language processing (NLP), are employed to identify table boundaries, detect headers, and extract key-value pairs like company codes, general ledger accounts, and financial periods. In various implementations, techniques, such as heuristic algorithms and natural language processing (NLP), are employed to identify table boundaries, detect headers, and extract key-value pairs like company codes, general ledger accounts, and financial periods. NLP can be useful in handling the variability of spreadsheet layouts by recognizing patterns and context within table headers, merged cells, and irregular data structures. It allows the system to understand the semantic meaning of terms in spreadsheets, which improves the accuracy of table identification and metadata extraction.

In addition to NLP, large language models (LLMs) may be leveraged to enhance the parsing process. For example, LLMs, trained on vast amounts of data, can perform advanced tasks such as recognizing complex relationships within spreadsheet data and resolving ambiguities in metadata descriptions. For example, an LLM can interpret non-standard headers or map ambiguous terms to predefined standard object patterns. The processing tasks performed by the LLM are often executed via external AI servers accessed through APIs. This integration allows the system to utilize cutting-edge AI capabilities without requiring extensive local computational resources. By using APIs to interact with external AI servers, excel parser service 104 can scale its processing power based on workload demands, ensuring consistent performance even when handling large or complex spreadsheets.

The LiveCube^{™} converter service 105 takes the parsed data and performs conversion tasks. In various embodiment, it translates spreadsheet (e.g., Excel) formulas into LiveCube^{™}-compatible formulas using proprietary knowledge bases, while constructing dependency graphs to resolve relationships between tables and formulas. In various embodiment, converter service 105 matches the extracted data to predefined LiveCube^{™} templates, ensuring that the converted workbook adheres to the required structure. It is understood that block 105 may be implemented for other types of structured workbooks as well.

After the conversion is complete, the report generator service 106 creates a comprehensive report detailing the conversion process. The report includes information about the input, intermediate, and output sheets, as well as the formulas and their translations. If unresolved dependencies or errors were encountered, these are also documented, providing transparency and insights into the workflow. This report enables users to review and validate the conversion results.

In various implementations, for the intermediate sheets, the report highlights the transformations applied during the dependency resolution and table classification phases. These details may include a dependency graph illustrating the relationships between tables, cells, and formulas, as well as adjustments made to formulas to align them with LiveCube^{™}'s columnar formula structure. The report may describe steps taken to resolve circular dependencies or address errors, such as broken references or unsupported functions in the original spreadsheet.

As an example, for the output sheets, the report may include the final state of the data as presented in the LiveCube^{™} compatible workbook. This section lists the translated formulas, showing their progression from the original Excel format to intermediate English text representation and finally to their LiveCube^{™} equivalent formulas. Each formula is annotated with details of any adjustments, such as changes in references or simplifications performed during the conversion. Additionally, the report provides details of the resulting workbook structure, including how tables, calculated columns, and dependencies were integrated into LiveCube^{™} sheets. It is understood that LiveCube^{™} compatible workbook includes other types of structured workbooks as well.

If unresolved dependencies or errors are encountered during any phase of the conversion, the report may provide a dedicated section documenting these issues. Examples of such issues include lists of formulas or references that could not be translated due to missing data or unsupported constructs, errors in table boundary detection or header identification, and unresolved dependency issues that could not be addressed. This section may also provide recommendations for manual intervention to address these remaining challenges.

The report can assist with validation by including visual aids such as snapshots of input and output tables, dependency graphs, and detailed error logs. For instance, it may contain side-by-side comparisons of original Excel sheets and their structured workbook equivalents, with annotations highlighting key differences. Furthermore, the report summarizes high-level statistics about the conversion process, such as the total number of sheets processed, the number of formulas successfully translated versus those requiring manual intervention, and the time taken for each phase of the conversion.

All data, including uploaded spreadsheets, intermediate processing results, and final outputs, are stored in the file storage 107 module. Depending on the implementation, file storage 107 may be implemented using a variety of storage architectures, tailored to meet the scalability, reliability, and accessibility needs of the system. As an example, the file storage may include a centralized server-based solution where a dedicated server is configured to store uploaded spreadsheet files, intermediate processing data, and final outputs such as structured workbooks (e.g., LiveCube^{™} workbooks) and reports. This server may utilize high-capacity hard drives or solid-state drives to accommodate large volumes of data, along with redundant configurations to ensure data integrity and fault tolerance.

The file storage may be implemented as part of a distributed data farm. For example, a data farm consists of multiple interconnected servers, each contributing to the overall storage capacity. Such an implementation is suitable for handling large-scale data processing workloads, as it allows for horizontal scaling. In some embodiments, the file storage may be implemented using cloud storage solutions, where files are stored on servers maintained by third-party cloud providers. Cloud storage offers advantages such as elastic scalability, enabling the system to dynamically adjust its storage capacity based on demand. The storage system may also support hybrid configurations, where critical data is stored on-premises within a private server infrastructure for enhanced security, while less sensitive data or backup files are stored in the cloud.

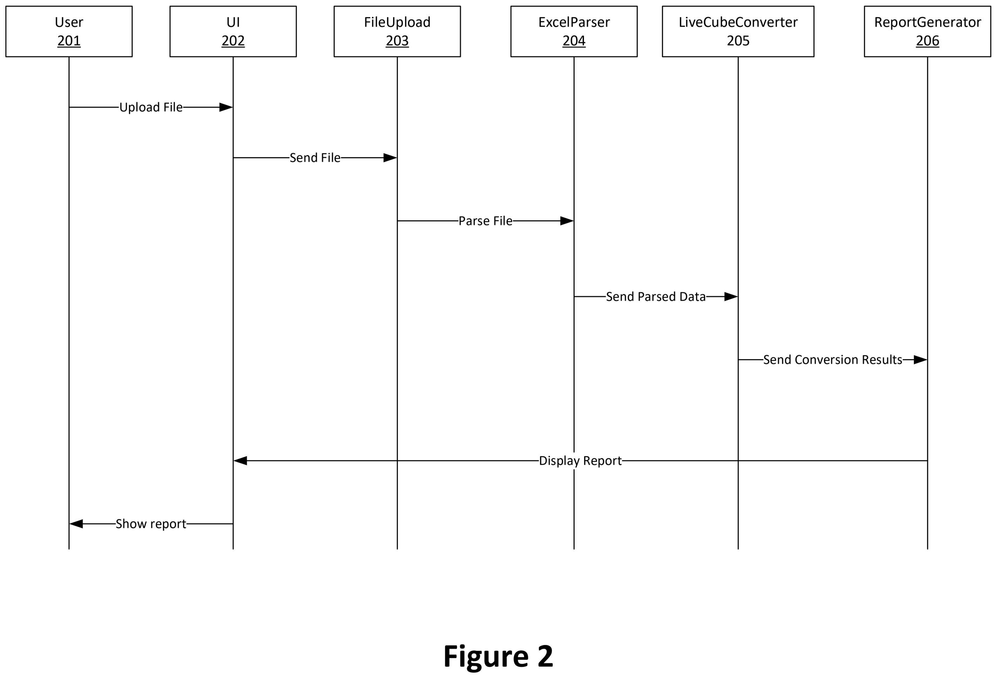

Figure 2 is a simplified dataflow diagram illustrating a method for converting spreadsheets for processing by an online system according to embodiments of the present invention. This diagram is merely an example, which should not unduly limit the scope of the claims. One of ordinary skill in the art would recognize many variations, alternatives, and modifications. The process begins with user 201 uploading a spreadsheet file via UI 202. For example, the UI acts as a medium for file submission and communicates the user's requests to the backend system. The uploaded file is then transferred from the UI to the file upload service 203, which validates and stores the file in the system. For example, the file upload service ensures that the uploaded file meets the required format and size specifications before proceeding.

Once the file is successfully stored, excel parser service 204 retrieves the file and begins processing it. This service parses the spreadsheet to extract tables, metadata, and formulas. Using advanced techniques such as heuristic algorithms, NLP, and LLMs, the Excel parser identifies table boundaries, detects headers, and extracts key-value pairs such as company codes, general ledger accounts, and financial periods. If needed, Excel parser service 204 interacts with external AI servers via APIs to leverage LLMs for tasks such as interpreting non-standard layouts or resolving ambiguities in metadata.

After parsing, the processed data is sent to LiveCube^{™} converter service 205, which performs core conversion by translating Excel formulas into LiveCube^{™}-compatible formulas, constructing dependency graphs, and mapping tables to predefined LiveCube^{™} templates. Dependency graphs ensure that relationships between data elements are preserved during the conversion, and template mapping facilitates the integration of data into LiveCube^{™}'s structure. For example, LiveCube^{™} converter service 205 handles formula translations and dependency resolutions with a high degree of accuracy, leveraging AI-based techniques and proprietary knowledge bases. It is understood that block 205 may be implemented for other types of structured workbooks as well.

The conversion results are subsequently transmitted to report generator service 206, which compiles a comprehensive report detailing the entire conversion process, including input, intermediate, and output sheets, translated formulas, and any unresolved issues such as errors in table detection or unsupported formulas. The report provides actionable insights and serves as a validation tool for the user.

Finally, the conversion results and the detailed report are sent back to UI 202, where the user can review the outcomes. The report, displayed to the user, includes visual summaries such as dependency graphs, formula translations, and a comparison of the input and output data. This end-to-end process ensures a seamless and efficient transition of data from spreadsheets to the LiveCube^{™} environment, leveraging advanced computational and AI-driven methodologies to handle even the most complex conversion scenarios.

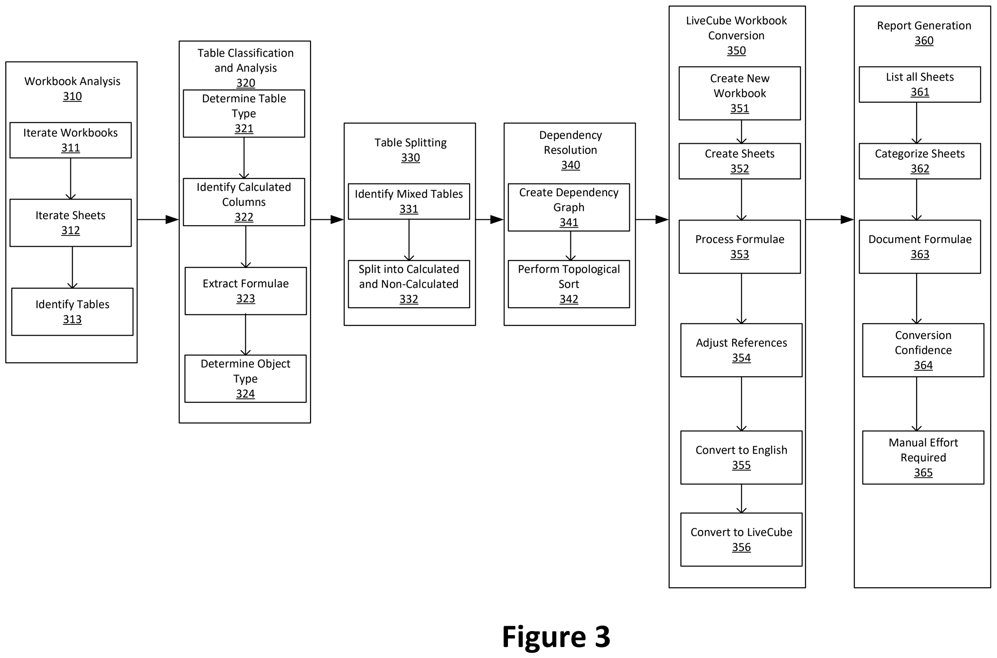

Figure 3 is a simplified flow diagram illustrating a method for converting spreadsheets for processing by an online system according to embodiments of the present invention. This diagram is merely an example, which should not unduly limit the scope of the claims. One of ordinary skill in the art would recognize many variations, alternatives, and modifications. The process begins at workbook analysis 310 block, which represents the initial phase of the conversion. Here, the system, at block 311, iterates through all uploaded workbooks to identify individual sheets at block 312. Within each sheet, tables are located and identified at block 313, with their boundaries and metadata extracted. This analysis forms the foundation for downstream classification and processing, ensuring that the input data is thoroughly prepared.

As an example, output sheets and input sheets are processed differently. Input sheets refer to spreadsheets or portions of spreadsheets that provide foundational data for processing and have no backward dependencies, meaning they do not rely on other sheets for their data or calculations. These sheets typically contain raw data, such as key-value pairs (e.g., company code, GL account, period) and metadata. For example, input sheets are processed by matching their tables against standard object patterns using techniques such as metadata extraction and fuzzy matching, often LLMs. This classification ensures the data is aligned with predefined templates for further processing. Output sheets have no forward dependencies, meaning they do not provide input to other sheets or calculations. For example, these sheets are matched against standard report signatures through metadata extraction and fuzzy matching using techniques such as LLMs. Output sheets represent structured, finalized data aligned with identified standard reports, ensuring their usability in reporting or integration into systems like LiveCube^{™}, or other systems using structured workbooks.

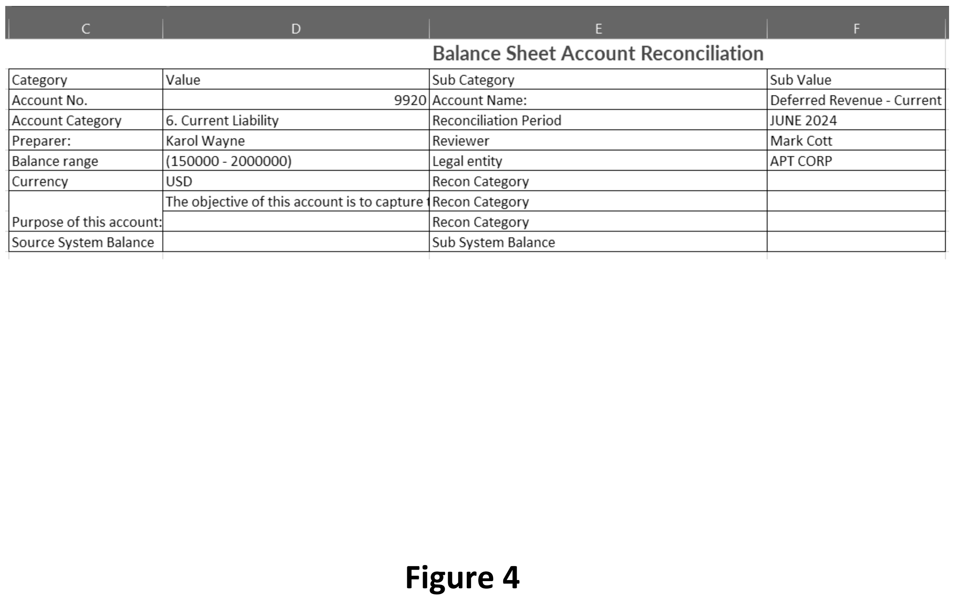

Figure 4 is a simplified diagram illustrating an input spreadsheet being used for conversion according to embodiments of the present invention. For example, input spreadsheets may be identified in various ways. As an example, the spreadsheet in Figure 4 is a balance sheet account reconciliation template containing various categories of information organized in a tabular format. This includes fields such as account number, account category, preparer, reviewer, reconciliation period, balance range, currency, legal entity, and source system balance. The table is organized into rows and columns, with some cells containing headers, metadata, and key-value pairs that describe the financial attributes and reconciliation details. The spreadsheet comprises multiple categories and subcategories, such as "Category," "Value," "Sub Category," and "Sub Value," each providing contextual information about the financial data. For example, the account number "9920" corresponds to the account name "Deferred Revenue - Current," while the balance range is specified as "(150,000 - 2,000,000)" under the currency "USD." Other metadata fields, such as the preparer ("Karol Wayne") and reviewer ("Mark Cott"), provide further context for the reconciliation process. The input data, though structured, may exhibit non-standard layouts, merged cells, and multi-level headers, which the system must process intelligently.

As an example, the system identifies and classifies input spreadsheets by analyzing their structure, metadata, and content using advanced techniques such as heuristic algorithms, NLP, and LLMs. The process begins by detecting table boundaries and recognizing headers using dynamic programming and pattern recognition. For instance, the system identifies the table structure based on continuous rows and columns with non-empty cells while treating merged cells or sparse layouts as part of the overall table structure. Once the tables are identified, the system extracts metadata such as key-value pairs (e.g., "Account No.: 9920," "Currency: USD," "Preparer: Karol Wayne"). These metadata fields are then matched against predefined standard object patterns and report signatures to classify the spreadsheet as an input table. For example, the account number and category fields may be mapped to a "Balance Sheet Reconciliation" object, while fields like "Reconciliation Period" and "Reviewer" indicate that the table represents a periodic financial report.

Depending on the implementation, the classification process may determine whether the table is an input table, an output table, or an intermediate table based on its role in the overall data workflow. Input tables, such as the one in Figure 4, typically contain raw data with no backward dependencies, making them the starting point for further processing. The system leverages LLMs via APIs to resolve ambiguities, such as identifying mislabeled or incomplete headers, and to map non-standard terminologies to standardized formats.

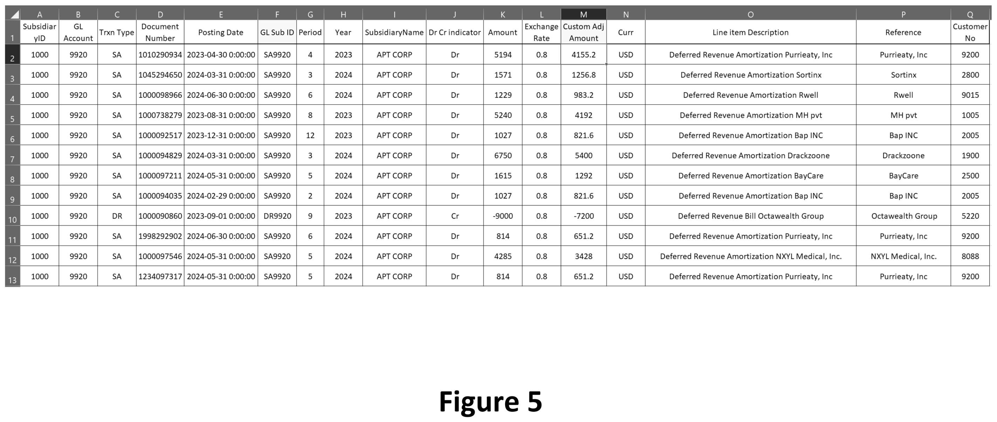

Figure 5 is a simplified diagram illustrating a spreadsheet extracted by a table classification and template matching module according to embodiments of the present invention. As an example, the extracted spreadsheet, as shown, is derived from the input data, such as the one shown in Figure 4, after being processed by the system to identify, classify, and align its tables with predefined standard objects and templates. The extracted spreadsheet includes columns such as "Subsidiary ID," "GL Account," "Txn Type," "Document Number," "Posting Date," "GL Sub ID," "Period," "Year," "Cr Indicat Amount," "Custom Adj Amount," and other metadata fields. These columns provide a structured view of financial transactions and account details, enabling subsequent stages of processing.

For example, the extraction process begins during the workbook analysis 310 and table classification and analysis 320 steps of Figure 3. In the Workbook Analysis phase, the system identifies individual sheets and tables within the input workbook, detecting table boundaries and extracting metadata fields. In the table classification and analysis phase, the module determines the type of table (e.g., input, calculated column, or output) and evaluates whether it aligns with predefined standard objects or represents a custom structure. For example, during this phase, the extracted columns in Figure 5 are classified based on their role in the financial data workflow, such as identifying key-value pairs (e.g., "Subsidiary ID: 1000") and mapping metadata to predefined templates (e.g., matching "GL Account: 2600" to standard object patterns).

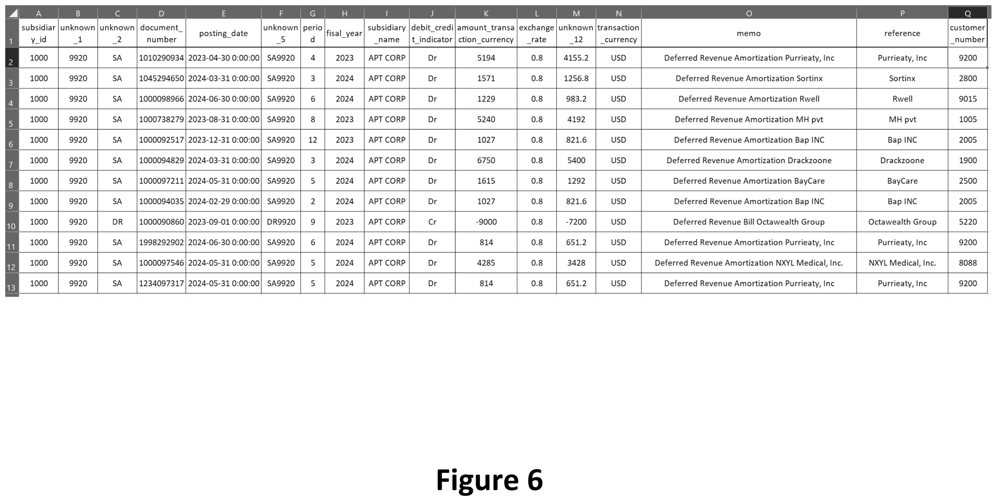

Now referring back to Figure 3. The next phase, after block 310, is table classification and analysis, at block 320, where the identified tables are classified based on their roles and structural properties. This involves determining the table type at block 321, such as input, calculated column, or output tables, and identifying calculated columns at block 322. Figure 6 is a simplified diagram illustrating a spreadsheet obtained as the output of a table classification and template matching module according to embodiments of the present invention. For example, Figure 6 shows mapping and aligning input data with predefined object templates and report formats for seamless integration into downstream processes. For example, block 320 processes each identified table in the input spreadsheet to determine its type and align it with appropriate templates. Initially, the module identifies whether a table is an input table (e.g., step 321), an input table with calculated columns, a calculated column table, an output table with calculated columns, or a standard output table (e.g., step 322). This classification determines the role of the table in the data processing workflow. For input tables, the system analyzes metadata, such as key-value pairs (e.g., "subsidiary," "GL account," "fiscal year"), to determine whether the table corresponds to a standard object or a custom structure. Configuration parameters extracted from this metadata may be used to align the table with predefined templates. For example, if the table contains calculated columns, the module identifies and extracts the associated formulas. These formulae are preserved for later processing in subsequent stages, such as formula translation and dependency resolution. The extracted formulas and metadata are crucial for maintaining the functional integrity of the data. Based on the analysis, the module matches the table with the most appropriate structured workbook (e.g., LiveCube^{™}) template using techniques such as metadata extraction, pattern recognition, and fuzzy matching, often powered by LLMs. This ensures that the table structure and its associated data are compatible with structured workbook (e.g., LiveCube^{™}) standards. The rationale behind the template selection is also documented, providing traceability and transparency for the classification process.

As an example, the spreadsheet in Figure 6 shows the output at this stage, where columns such as "subsidiary," "GL account," "posting date," "fiscal year," "amount," and "reference" have been aligned with a specific object type or template. Each field represents structured data extracted and classified for further processing. The table format has been refined to ensure compatibility with LiveCube^{™}'s environment, enabling efficient translation into a LiveCube^{™}-compatible workbook during the subsequent LiveCube^{™} workbook conversion module. This structured output forms the foundation for accurate reporting, formula integration, and dependency resolution in the later stages of the workflow. It is understood that LiveCube^{™} workbook conversion may be implemented for other types of structured workbooks as well.

Now referring back to Figure 3. Formulas within these columns are extracted, at block 323, for subsequent translation and alignment with structured workbook (e.g., LiveCube^{™}) standards. Additionally, the system analyzes metadata to determine whether each table corresponds to a standard object or a custom structure, at block 324. It is understood that block 323 may be implemented for other types of structured workbooks as well.

In cases where tables contain both calculated and non-calculated columns, the table splitting, at block 330, handles their separation. Mixed tables are first identified at block 331, and the system then splits them into two tables: one containing non-calculated columns and another containing calculated columns, at block 332.

At bock 340, dependency resolution determines the relationships between tables, formulas, and data elements. A dependency graph is created, at block 341, to map these relationships and represent the order in which formulas and tables must be processed. Using a topological sorting algorithm at block 342, the system determines the correct sequence of calculations to resolve dependencies accurately. This step is particularly important for handling complex scenarios, such as circular references and cross-sheet dependencies, ensuring that all data relationships are preserved.

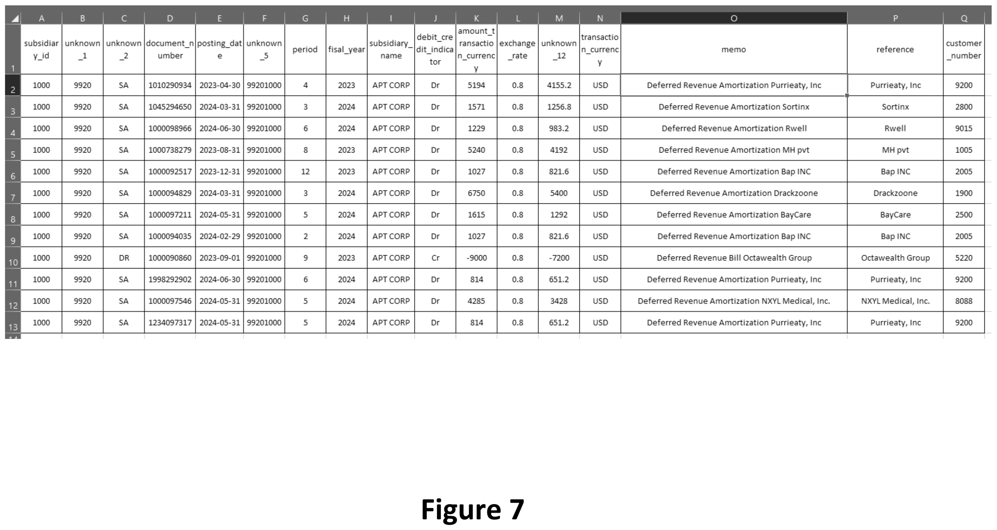

Figure 7 is a simplified diagram illustrating a spreadsheet obtained as the output of a dependency resolution according to embodiments of the present invention. For example, the data presented in the spreadsheet reflects the resolution of relationships and dependencies among tables, columns, and formulas identified during the earlier stages of processing. In various implementations, block 340 involves using a tokenizer, where the process parses the data from classified tables and columns to identify relationships and dependencies among various elements. For example, columns such as "subsidiary," "GL account," "debit/credit indicator," and "amount" are analyzed to establish how values in one column depend on those in another. This relationship mapping is particularly crucial for resolving complex dependencies, such as calculations involving multiple intermediate tables or cross-referenced data. Once the dependency graph is created, the module performs a topological sort to determine the correct sequence in which calculations or data transformations must occur. Topological sorting ensures that any data elements or formulas requiring inputs from other cells, rows, or columns are processed in the appropriate order. For instance, if a column such as "amount" depends on prior adjustments in "exchange rate," these dependencies are resolved so that the final value in the "amount" column is accurate.

Now referring back to Figure 3. The processed data is then converted into a structured workbook, such as LiveCube^{™}-compatible workbook, in the structured (e.g., LiveCube^{™}) workbook conversion 350 block. For example, a new workbook is initialized in a structured workbook environment (e.g., at block 351), and sheets corresponding to the input and output tables are created, at block 352. Extracted formulas are processed to align with the structured workbook's columnar format (e.g., at block 353), and references within these formulas are adjusted to match the structure of the new workbook, at block 354. The formulas are first converted into an intermediate English text representation (e.g., at block 355), enabling validation and ensuring accurate translation. The English representations are subsequently translated into LiveCube^{™}-compatible formulas, at block 356, to complete the conversion process. For example, English representations may be useful for human understanding and/or providing prompts for LLMs. It is understood that block 350 may be implemented for different types of structured workbooks as well.

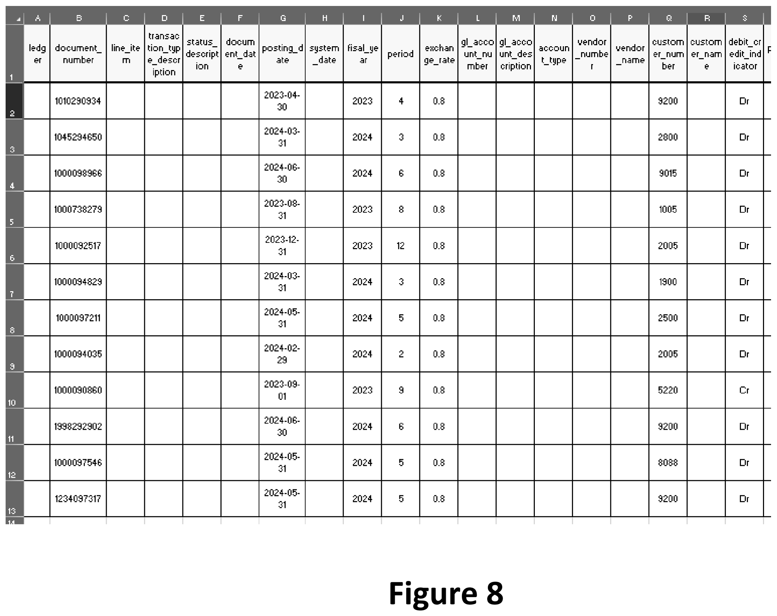

Figure 8 is a simplified diagram illustrating a spreadsheet generated by a workbook generation module according to embodiments of the present invention. For example, Figure 8 shows fully processed data structured into a structured workbook (e.g., LiveCube^{™}) format. Formulae within the input tables are systematically processed and converted. If the formulas are part of a columnar calculation, they are collapsed into a single columnar formula to simplify processing and improve efficiency. References within formulas are adjusted to fit the structure of the new workbook, ensuring consistency across tables and sheets. As part of this process, formulae are first converted into an intermediate English text representation to facilitate translation into structured workbook (e.g., LiveCube^{™}) formulas. For example, the columnar relationships between fields such as "exchange_rate," "amount," and "debit_credit" would be translated into structured workbook (e.g., LiveCube^{™}) specific computational rules while preserving their logical dependencies. Once the formulas are validated and translated, they are integrated into the structured workbook (e.g., LiveCube^{™}) workbook. As depicted in Figure 8, the output sheet includes calculated fields, adjusted references, and metadata aligned with structured workbook's (e.g., LiveCube^{™}) requirements. For instance, columns like "period," "exchange_rate," and "customer_number" reflect the processed relationships and dependencies identified during earlier stages. This ensures that the output is not only compatible with LiveCube^{™}'s analytical capabilities but also retains the accuracy and integrity of the original data.

Finally, report generation block 360 creates a report summarizing the entire conversion process. The report begins by listing all sheets processed during the workflow at block 361, and categorizing them into input, intermediate, and output sheets at block 362. Documented formulas, including any adjustments made during translation, are provided at block 363. The report may also provide a conversion confidence assessment at block 364, offering a quantitative or qualitative measure of the accuracy and reliability of the conversion. Unresolved issues, such as formula translation failures or structural inconsistencies, are highlighted, along with an estimate of the manual effort required to address them, at block 365.

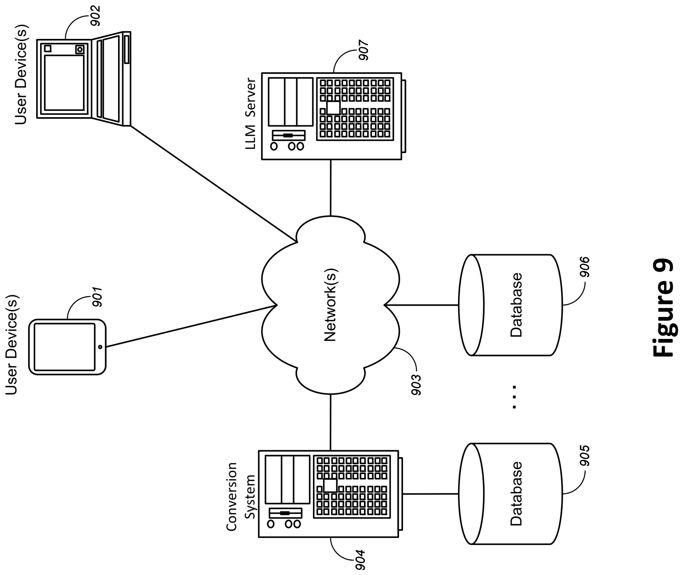

Figure 9 is a simplified diagram illustrating a system configured to convert spreadsheets and workbooks according to embodiments of the present invention. This diagram is merely an example, which should not unduly limit the scope of the claims. One of ordinary skill in the art would recognize many variations, alternatives, and modifications. For example, the system can convert spreadsheets and workbooks into a structured workbook format, such as LiveCube^{™}-compatible workbooks, according to embodiments of the present invention.

User devices (e.g., smartphone 901 and laptop 902) are the entry points for initiating the conversion process. These devices, which may include tablets, laptops, desktops, or other computing devices, interact with the system through a web-based user UI. Users upload spreadsheet files via this interface and monitor the conversion progress. For example, a financial analyst might use a laptop 902 to upload an Excel workbook for conversion.

The uploaded files are transmitted over networks 903 to the conversion system 904. The conversion system is the core processing unit responsible for executing the conversion process. System 904 may include modules (e.g., software code executed by processors) such as the Excel parser service, the LiveCube^{™} converter service, and the report generator service. The Excel parser service extracts data, formulas, and metadata from the uploaded spreadsheet, using techniques such as heuristic algorithms, NLP, and fuzzy matching. For advanced parsing, such as interpreting non-standard layouts or ambiguous metadata, the system may communicate with an LLM server 907 via APIs. The LLM server leverages external AI capabilities to enhance data extraction accuracy by resolving ambiguities in metadata or complex dependencies in spreadsheet data.

The conversion system 904 includes a file storage module that interacts with databases 905 and 906. For example, these databases store uploaded files, intermediate processing results, and final outputs, such as structured workbook (e.g., LiveCube^{™}) workbooks and detailed reports. Depending on the implementation, the file storage may reside on centralized servers, distributed data farms, or cloud-based storage solutions, ensuring scalability, reliability, and fault tolerance. For instance, critical data could be stored in a private server 905 for enhanced security, while backups are maintained in a distributed cloud storage 906.

In various embodiment, the invention incorporates three standardized components to enhance the accuracy and efficiency of the conversion process. These components are standard reports, standard structured workbook (e.g., LiveCube^{™}) templates, and standard key-values, and they work together to automate the classification, transformation, and integration of spreadsheet data into structured (e.g., LiveCube^{™}) workbooks.

Standard Reports are pre-defined report signatures and identification patterns used to automatically categorize output sheets into known report types. These signatures function similarly to the standard object schema approach, ensuring that the system can recognize and align spreadsheet data with established reporting structures. For instance, financial reports such as balance sheets or income statements are matched to their respective signatures, enabling consistent formatting and adherence to industry standards. This automation significantly reduces manual classification effort and ensures that output sheets are tailored to meet common business requirements.

Standard structured workbook (e.g., LiveCube^{™}) are ready-made templates designed to address common scenarios in structured workbook (e.g., LiveCube^{™}) workbooks. These templates are built using fixed standard objects, which provide a structured framework for data organization and computation. By leveraging these templates, the system ensures that converted data produces standardized reports aligned with structured workbook (e.g., LiveCube^{™}) requirements. For example, a template for "Revenue Reconciliation" might include predefined columns for revenue categories, adjustments, and totals, streamlining the integration process. The system intelligently selects the most appropriate template based on the identified standard objects and reports, ensuring consistency and accuracy across all converted workbooks.

Standard key-values are configuration parameters extracted from Excel or other types of spreadsheets and used to configure dataset filters for standard objects. Examples of key-values include company codes, general ledger (GL) account numbers, and periods. These parameters provide context for the data being processed, allowing the system to align tables with the appropriate objects and reports. For instance, a GL account number might determine the specific account type in a financial reconciliation template, while a period parameter could define the timeframe for a reporting table.

While the above is a full description of the specific embodiments, various modifications, alternative constructions and equivalents may be used. Therefore, the above description and illustrations should not be taken as limiting the scope of the present invention which is defined by the appended claims.

## Claims

1. A method for converting spreadsheet files, the method comprising:
receiving a first spreadsheet file;
identifying a first table in the first spreadsheet file;
extracting metadata associated with the first table;
identifying, through fuzzy matching, a standard object for an input sheet by matching the metadata against standard object patterns;
identifying, through fuzzy matching, a standard report for an output sheet by matching the metadata against standard report signatures;
identifying a formula from the first table;
selecting a template based on the standard object and the standard report;
creating a dependency graph for the first table according to the template;
performing a topological sort on the dependency graph;
creating a workbook comprising a first sheet, the first sheet being based on the first table and comprising the dependency graph, the workbook being stored in a non-volatile memory; and
generating a report for the workbook.

2. The method of claim 1, wherein the first spreadsheet file is received via a communication network.

3. The method of claim 1, wherein the fuzzy matching is performed using a large language model.

4. The method of claim 1, further comprising documenting a rationale for selecting the template.

5. The method of claim 1, further comprising extracting key-value pairs associated with the first table.

6. The method of claim 1, further comprising creating a second table and a third table, the second table comprising non-calculated columns, the third table comprising calculated columns.

7. The method of claim 1, further comprising converting a first formula in a first format of the first sheet into an English text.

8. The method of claim 7, further comprising converting the English text into a second formula in a second format.

9. The method of claim 1, further comprising:
transmitting the report to a user via a communication network; and
displaying the report on a display for the user.

10. A method for converting spreadsheet files, the method comprising:
receiving a first spreadsheet file;
identifying a first table in the first spreadsheet file;
extracting metadata associated with the first table;
identifying a table type by performing fuzzy matching using at least the metadata;
selecting a template based at least on the table type;
creating, using at least a tokenizer, a dependency graph for the first table according to the template;
performing a topological sort on the dependency graph to obtain a topographical order; and
creating a digital document comprising a first sheet, the first sheet being based on the first table and the topographical order, the workbook being stored in a non-volatile memory.

11. A system for converting spreadsheet files, comprising:
a communication interface configured to receive a spreadsheet file;
a memory;
a non-volatile storage storing instructions; and
a processor configured to execute the instructions to:
identify a first table within the spreadsheet file;
extract metadata associated with the first table;
identify a standard object for an input sheet by comparing the metadata to standard object patterns;
identify, using fuzzy matching, a standard report for an output sheet by matching the metadata to standard report signatures;
create a dependency graph for the first table based on a selected template;
perform a topological sort on the dependency graph;
generate a workbook comprising a first sheet based on the first table and the dependency graph;
store the workbook in the non-volatile storage; and
generate a report for the workbook.

12. The system of claim 11, wherein the communication interface is configured to send the metadata to a cloud server for processing using large language models.

13. The system of claim 11, wherein the memory stores the metadata and the dependency graph.

14. The system of claim 11, wherein the processor is configured to identify a plurality of tables within the spreadsheet file.

15. The system of claim 11, wherein the processor is configured to identify borders associated with the first table.
